# EUROPÄISCHE PATENTSCHRIFT

(11) **EP 3 973 211 B1**
(45) Veröffentlichungstag und Bekanntmachung des Hinweises auf die Patenterteilung: **30.08.2023**
(21) Anmeldenummer: 20721439.6
(22) Anmeldetag: 08.04.2020
(51) Int. Cl.: F16H 57/025, B61F 5/00, B61C 9/50

(54) **ANORDNUNG ZUR ABSTÜTZUNG EINES GETRIEBES AN EINEM DREHGESTELL**
ARRANGEMENT FOR SUPPORTING A TRANSMISSION ON A BOGIE
ENSEMBLE POUR LE SOUTIEN D'UNE TRANSMISSION SUR UN BOGIE

(30) Priorität: 21.05.2019 DE 102019207396
(43) Veröffentlichungstag der Anmeldung: 30.03.2022
(73) Patentinhaber: ZF Friedrichshafen AG, 88046 Friedrichshafen (DE)
(72) Erfinder: HUPFAUER, Michael, 87448 Waltenhofen (DE); WIERUSZEWSKI, Phillip, 88045 Friedrichshafen (DE); FREBEL, Bernd, 88045 Friedrichshafen (DE)
(86) Internationale Anmeldenummer: PCT/EP2020/059980
(87) Internationale Veröffentlichungsnummer: WO 2020/233896

(56) Entgegenhaltungen:
- AT-B1- 505 902
- DE-A1-102013 213 442
- Anonymous: "Betriebsanleitung Getriebe ASZF für U-Bahn Nürnberg", Flender, 17. Februar 2003 (2003-02-17), Seiten 1-50, XP055660469, Gefunden im Internet: URL:- [gefunden am 2020-01-22]

## Beschreibung

Die Erfindung betrifft eine Anordnung zur Abstützung eines Getriebes am Drehgestell eines Schienenfahrzeuges nach der älteren Anmeldung mit dem amtlichen Aktenzeichen DE 10 2019 200 769.4.

In der älteren Anmeldung mit dem Aktenzeichen DE 10 2019 200 769.4 ist eine Anordnung eines Getriebes in einem Drehgestell eines Schienenfahrzeuges offenbart, wobei das Getriebe, welches abtriebsseitig mit einer Radachse verbunden ist, mittels einer Drehmomentstütze an dem Drehgestell abgestützt ist. Die Drehmomentstütze überträgt somit Kräfte aus dem Reaktionsmoment, welches sich aus der Differenz des Abtriebs- und des Antriebsmomentes des Getriebes ergibt. Für den Fall des Versagens der Drehmomentstütze, beispielsweise durch einen Bruch ist am Getriebegehäuse ein so genanntes Notfangelement angeordnet, welches von einer entsprechenden Auffangeinrichtung am Drehgestell aufgefangen, d. h. provisorisch abgestützt wird. Damit wird verhindert, dass das Getriebe im Versagensfalle in das Gleisbett abstürzt, was zu katastrophalen Schäden führen kann. Ein Problem kann darin gesehen werden, dass der Eintritt eines Versagensfalles, also beispielsweise der Bruch der Drehmomentstütze und das Auffangen des Getriebes in dem Notfangelement nicht ohne Weiteres bemerkt wird, sondern in der Regel erst durch eine gezielte Kontrolle und Inspektion des Drehgestells im Rahmen von Wartungsintervallen festgestellt werden kann.

Ferner ist aus der Betriebsanleitung des Herstellers Flender mit dem Titel "Betriebsanleitung Getriebe ASZF für U-Bahn Nürnberg", Flender, 17. Februar 2003 (2003-02-17), Seiten 1-50, XP055660469, eine Anordnung bekannt, umfassend ein Getriebe und ein Drehgestell eines Schienenfahrzeuges. Dabei ist das Getriebe über eine Drehmomentstütze gegenüber dem Drehgestell abgestützt. Das Getriebe weist eine Notfangeinrichtung mit einem Aufnahmebereich auf, welche an einer Stützstruktur des Drehgestells auffangbar ist.

Eine Aufgabe der Erfindung besteht darin, die Sicherheit der eingangs genannten Anordnung zur Abstützung des Getriebes am Drehgestell zu verbessern.

Die Erfindung umfasst die Merkmale des Patentanspruches 1. Vorteilhafte Ausgestaltungen ergeben sich aus den Unteransprüchen.

Erfindungsgemäß ist im Bereich der Notfangeinrichtung, auch Notfangelement genannt, und/oder im Bereich der Stützstruktur eine Überwachungseinrichtung in Form einer Sensorik vorgesehen, welche mittels geeigneter Sensoren feststellt, ob der Fall des Versagens der Drehmomentstütze eingetreten und somit eine ordnungsgemäße Abstützung des Getriebes gegenüber dem Drehgestell nicht mehr gegeben ist. In einem solchen Falle tritt - wie in der älteren Anmeldung offenbart - die Notfangeinrichtung in Funktion und stützt das Getriebe als Notfallmaßnahme an einer geeigneten Auffangeinrichtung, ausgebildet als Stützstruktur, am Drehgestell ab. Damit ist die Funktion des Getriebes zwar weiterhin gewährleistet, allerdings besteht auch die Gefahr einer Beschädigung, wenn längere Zeit mit dieser provisorischen, mit Spiel behafteten Abstützung gefahren wird. Die Sensorik meldet den Fall des Versagens an eine geeignete Stelle, z. B. an den Zugführer oder an eine Sicherheitszentrale, so dass der Schaden gegebenenfalls beim nächsten Halt des Zuges behoben und Folgeschäden vermieden werden können. Ein Versagensfall aufgrund der eingebauten Sensorik immer sofort erkannt und gemeldet werden. Die Sensorik muss derart beschaffen sein, dass sie beim Bruch der Drehmomentstütze die relativ kurze, jedoch heftige Drehbewegung des Getriebes um die Radachse und das Aufschlagen des Getriebes auf das Notfangelement sensorisch erfasst und ein Alarmsignal generiert. Für eine solche Sensorik ergeben sich aufgrund bekannter Sensoren unterschiedliche Möglichkeiten, nämlich einerseits die Auswahl der Sensoren und andererseits die Anordnung der Sensoren an geeigneter Stelle.

Nach einer bevorzugten Ausführungsform ist - bei ordnungsgemäßer Abstützung des Getriebes durch die Drehmomentstütze - zwischen dem Aufnahmebereich des Notfangelements und dem Auffangbereich am Drehgestell, einer Stützstruktur, ein offener Spalt belassen, so dass zwischen dem Getriebegehäuse respektive dem Notfangelement einerseits und der Stützstruktur des Drehgestells andererseits keinerlei Kontakt besteht. Der Spalt wird teilweise geschlossen, sobald die Drehmomentstütze bricht, d. h. der Versagensfall eintritt - dann schlägt das Notfangelement auf die Stützstruktur am Drehgestell auf und stellt schlagartig einen mechanischen Kontakt her. Dieser Effekt wird durch die Sensorik ausgenutzt.

Nach einer weiteren bevorzugten Ausführungsform weist der Aufnahmebereich des Notfangelements einen Ausschnitt auf, und die Stützstruktur des Drehgestells weist einen an den genannten Ausschnitt angepassten Querschnitt auf, sodass das Notfangelement und die Stützstruktur bei Ausfall der Drehmomentstütze eine formschlüssige Verbindung, allerdings mit deutlichem Spiel, herstellen.

Beispielsweise weist der Aufnahmebereich des Notfangelements einen etwa U-förmig ausgebildeten Ausschnitt und die Stützstruktur des Drehgestells einen etwa rechteckförmigen, an den U-förmigen Ausschnitt angepassten Querschnitt auf. Damit wird erreicht, dass das Notfangelement die Stützstruktur am Drehgestell beidseitig - wie ein Maulschlüssel - umfasst und bei Ausfall der Drehmomentstütze eine formschlüssige Verbindung, allerdings mit deutlichem Spiel in beiden Drehrichtungen, herstellt. In anderen Ausführungsformen der Erfindung kann das Notfangelement auch stab- oder kugelförmig ausgestaltet sein und bei Ausfall der Drehmomentstütze mit einer entsprechend angepassten Stützstruktur am Drehgestell zusammenwirken.

Nach einer weiteren bevorzugten Ausführungsform ist die Drehmomentstütze benachbart zum Aufnahmebereich des Notfangelements an dem Getriebe angelenkt. Der Begriff angelenkt bedeutet in diesem Zusammenhang, dass die Drehmomentstütze gelenkig verbunden ist mit dem Getriebe bzw. mit einem Gehäuse des Getriebes. Im Versagensfalle wirkt die durch das Notfangelement bewirkte Abstützkraft etwa mit dem gleichen Hebelarm zur Radachse.

Nach einer weiteren bevorzugten Ausführungsform umfasst die Sensorik mindestens einen Sensor, welcher im Bereich des Spaltes und/oder im Aufnahmebereich des Notfangelements angeordnet ist. Der Sensor oder die Sensoren sind also in dem Bereich angeordnet, in welchem sich im Versagensfalle Änderungen ergeben, sei es bezüglich der Geometrie des Spaltes oder sei es bezüglich der Spannungen und Verformungen im Aufnahmebereich des Notfangelements.

Nach einer weiteren bevorzugten Ausführungsform ist der mindestens eine Sensor als Dehnungsmessstreifen ausgebildet, welcher an geeigneter Stelle, nämlich da, wo Verformungen oder Dehnungen auftreten, angeordnet wird, Veränderungen der Dehnung misst und in ein elektrisches Signal umwandelt. Für die Anbringung eines oder mehrerer Dehnungsmessstreifen ist insbesondere der Randbereich des U-förmigen Ausschnitts am Notfangelement geeignet, weil bei einem Stoß bzw. einer Belastung des Notfangelements erhöhte Zugspannungen, verbunden mit entsprechenden Dehnungen, insbesondere im inneren Bereich des U-förmigen Ausschnittes auftreten.

Nach einer weiteren bevorzugten Ausführungsform ist der mindestens eine Sensor als elektrischer Ein/Aus-Kontakt ausgebildet und vorzugsweise im Bereich des Spaltes angeordnet. Sobald im Versagensfall der Kontakt zwischen Notfangelement und Stützstruktur hergestellt ist, wird der Ein/Aus-Kontakt aktiviert, wodurch ein Alarmsignal erzeugt wird.

Nach einer weiteren bevorzugten Ausführungsform ist der mindestens eine Sensor als Einrichtung zur Messung eines Durchgangsstromes zwischen dem Notfangelement und der Stützstruktur ausgebildet. Sobald im Versagensfall der Spalt teilweise verschwindet und durch einen lokalen metallischen Kontakt zwischen Notfangelement und Drehgestell überbrückt wird, kann ein Strom fließen, der messbar ist und ein Signal liefert.

Ein Ausführungsbeispiel der Erfindung ist in der Zeichnung dargestellt und wird im Folgenden näher beschrieben. Es zeigen
- Fig. 1: eine Draufsicht auf ein Getriebe mit Drehmomentstütze und Notfangeinrichtung im Drehgestell eines Schienenfahrzeuges und
- Fig. 2: einen Ausschnitt der Notfangeinrichtung und einer Auffangeinrichtung am Drehgestell.

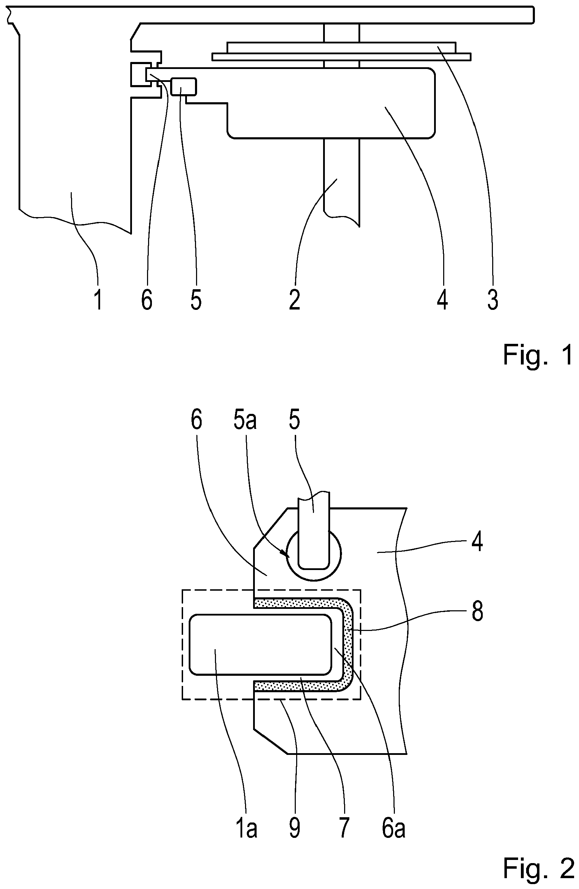

Fig. 1 zeigt eine Draufsicht auf ein Drehgestell 1 (teilweise dargestellt) eines Schienenfahrzeuges mit einer Radachse 2 und einem daran befestigten Antriebsrad 3. Auf der Radachse 2 ist ein Übersetzungsgetriebe 4, im Folgenden kurz Getriebe 4 genannt, welches von einem nicht dargestellten Elektromotor angetrieben wird, angeordnet. Im äußeren Bereich des Getriebes 4, d. h. in der Zeichnung links von der Radachse 2 ist eine Drehmomentstütze 5 angeordnet, welche das Reaktionsmoment des Getriebes 4 gegenüber dem Drehgestell 1 abstützt. Die Drehmomentabstützung entspricht der diesbezüglichen Beschreibung und Zeichnung in der eingangs genannten älteren Anmeldung, auf welche hier verwiesen wird. Am Getriebe 4 ist ferner eine Notfangeinrichtung 6, auch Notfangelement 6 genannt, angeordnet, welche das Getriebe 4 bei Bruch oder Ausfall der Drehmomentstütze 5 am Drehgestell 1 notfallmäßig abstützt, so dass die Funktion des Getriebes 4 und der Antrieb der Radachse 2 erhalten bleiben.

Fig. 2 zeigt einen Ausschnitt des Notfangelements 6 mit der Drehmomentstütze 5, in Richtung der Radachse 2 (Fig. 1) gesehen. Das Notfangelement 6 ist hier beispielhaft in das Getriebe 4 bzw. das Getriebegehäuse integriert, kann aber auch als separates, an dem Getriebegehäuse befestigtes Teil ausgebildet sein, wie in der eingangs genannten älteren Anmeldung offenbart. Die Drehmomentstütze 5 ist über ein Gelenk 5a am Getriebe 4 befestigt; das andere, nicht dargestellte Ende der Drehmomentstütze 5 ist am Drehgestell 1 angelenkt und überträgt somit Zug- und Druckkräfte, welche aus dem Reaktionsmoment des Getriebes 4 resultieren. Das Notfangelement 6 weist einen als U-förmigen Ausschnitt 6a ausgebildeten Aufnahmebereich 6a auf, innerhalb dessen eine Stützstruktur 1a, ausgebildet als Träger 1a mit einem rechteckigen Querschnitt, angeordnet ist, wobei der Träger 1a Teil des Drehgestells 1 ist und eine Auffangeinrichtung für das Notfangelement 6 bildet. Zwischen dem Träger 1a und dem U-förmigen Ausschnitt 6a ist ein Spalt 7 belassen, welcher ebenfalls etwa U-förmig ausgebildet ist. Somit wird das Reaktionsmoment des Getriebes 4 ausschließlich über die Drehmomentstütze 5 abgestützt, solange diese intakt ist.

Kommt es zu einem Bruch der Drehmomentstütze 5, so wird das Getriebe 4 aufgrund des nicht mehr abgestützten Reaktionsmoments in eine Drehbewegung um die Radachse 2 (Fig. 1) versetzt, was zu einem mechanischen Kontakt zwischen der Notfangeinrichtung 6, insbesondere dessen Aufnahmebereich 6a und dem Träger 1a führt. Je nach Drehrichtung der Radachse 2 schlägt entweder die in der Zeichnung obere Seite des U-förmigen Ausschnittes 6a auf die Oberseite des Trägers 1a oder die in der Zeichnung untere Seite des U-förmigen Ausschnittes 6a auf die Unterseite des Trägers 1a auf. In beiden Fällen wird also der Spalt 7 partiell überbrückt, und die Abstützkraft, d. h. die Kraft zur Abstützung des Reaktionsmoments des Getriebes 4 wirkt auf den Träger 1a, und zwar entweder von oben nach unten oder von unten nach oben. Aufgrund dieser Belastung entstehen im Randbereich des U-förmigen Ausschnittes 6a erhöhte Spannungen mit Spannungsspitzen, welche Dehnungen im Material hervorrufen. Die Dehnungen werden mit Sensoren 8 erfasst, die vorzugsweise als Dehnungsmessstreifen 8 ausgebildet und im Randbereich des U-förmigen Ausschnittes 6a angeordnet sind, dargestellt als grau angelegter U-förmiger Streifen 8. Sobald durch die Sensoren 8, auch Sensorik 8 genannt, eine erhöhte Dehnung des Materials gemessen wird, wird ein Alarmsignal erzeugt und z. B. an den Zugführer oder eine Sicherheitszentrale gemeldet. Der durch den Bruch der Drehmomentstütze 5 eingetretene Schaden kann dann bei nächster Gelegenheit, d. h. unverzüglich behoben werden, so dass weitere Schäden am Getriebe und am Drehgestell vermieden werden. Der insgesamt sensoriell zu überwachende Bereich, welcher den Aufnahmebereich 6a und die Stützstruktur 1a umfasst, ist durch ein Rechteck 9 in gestrichelten Linien markiert.

Alternativ zu den Dehnungsmessstreifen 8 kann auch ein (nicht dargestellter) Ein/Aus-Kontakt im Bereich des Spaltes 7 vorgesehen werden, wobei dieser Ein/Aus-Kontakt dann betätigt wird, wenn sich der Aufnahmebereich 6a des Notfangelements 6 dem Träger 1a nähert bzw. auf den Träger 1a aufschlägt.

Eine weitere (nicht dargestellte) Ausführungsvariante für einen Sensor zur Erfassung des Versagensfalles ist eine Messeinrichtung zur Messung eines Stromdurchflusses zwischen der Notfangeinrichtung 6 und dem Träger 1a. Sobald aufgrund des eingetretenen Versagensfalles ein mechanischer Kontakt zwischen dem Notfangelement 6 und dem Träger 1a hergestellt ist, fließt ein Strom, welcher messbar ist und ein entsprechendes Alarmsignal liefert.

### Bezugszeichen

- 1: Drehgestell
- 1a: Stützstruktur/Träger
- 2: Radachse
- 3: Antriebsrad
- 4: Getriebe
- 5: Drehmomentstütze
- 5a: Gelenk
- 6: Notfangeinrichtung/Notfangelement
- 6a: Aufnahmebereich
- 7: U-förmiger Spalt
- 8: Sensorik/Sensor/Dehnungsmessstreifen
- 9: zu überwachender Bereich

## Patentansprüche

1. Anordnung zur Abstützung eines Getriebes (4) am Drehgestell (1) eines Schienenfahrzeuges, wobei die Anordnung das Getriebe (4), das Drehgestell (1) und eine Drehmomentstütze (5) umfasst, und wobei das Getriebe (4) über die Drehmomentstütze (5) gegenüber dem Drehgestell (1) abgestützt ist und eine Notfangeinrichtung (6) mit einem Aufnahmebereich (6a) aufweist, welche an einer Stützstruktur (1a) des Drehgestells (1) auffangbar ist, **dadurch gekennzeichnet, dass** im Aufnahmebereich (6a) der Notfangeinrichtung (6) und/oder im Bereich der Stützstruktur (1a) eine Sensorik (8) zur Überwachung eines Versagens der Drehmomentstütze (5) angeordnet ist.

2. Anordnung nach Anspruch 1, **dadurch gekennzeichnet, dass** zwischen dem Aufnahmebereich (6a) der Notfangeinrichtung (6) und der Stützstruktur (1a) am Drehgestell (1) ein offener Spalt (7) belassen ist, welcher im Falle des Versagens der Drehmomentstütze (5) durch einen Kontakt zwischen der Notfangeinrichtung (6) und der Stützstruktur (1a) überbrückt wird.

3. Anordnung nach Anspruch 1 oder 2, **dadurch gekennzeichnet, dass** der Aufnahmebereich (6a) der Notfangeinrichtung (6) einen etwa U-förmig ausgebildeten Ausschnitt und die Stützstruktur (1a) einen etwa rechteckförmigen, dem U-förmigen Ausschnitt angepassten Querschnitt aufweist.

4. Anordnung nach Anspruch 1, 2 oder 3, **dadurch gekennzeichnet, dass** die Drehmomentstütze (5) benachbart zum Aufnahmebereich (6a) der Notfangeinrichtung (6) an dem Getriebe (4) angelenkt ist.

5. Anordnung nach Anspruch 2, oder nach einem der Ansprüche 3, 4, wenn sie von Anspruch 2 abhängig sind, **dadurch gekennzeichnet, dass** die Sensorik mindestens einen Sensor (8) umfasst, welcher im Bereich des Spaltes (7) und/oder im Aufnahmebereich (6a) der Notfangeinrichtung (6) angeordnet ist.

6. Anordnung nach Anspruch 5, **dadurch gekennzeichnet, dass** der mindestens eine Sensor als Dehnungsmessstreifen (8) ausgebildet ist.

7. Anordnung nach Anspruch 5, **dadurch gekennzeichnet, dass** der Sensor (8) als elektrischer Ein/Aus-Kontakt ausgebildet und im Spalt (7) oder am Aufnahmebereich (6a) der Notfangeinrichtung (6) angeordnet ist.

8. Anordnung nach Anspruch 5, **dadurch gekennzeichnet, dass** der Sensor (8) als Einrichtung zur Messung eines Durchgangsstromes zwischen der Notfangeinrichtung (6) und der Stützstruktur (1a) ausgebildet ist.

## Claims

1. Arrangement for supporting a transmission (4) on the bogie (1) of a rail vehicle, wherein the arrangement comprises the transmission (4), the bogie (1) and a torque support (5), and wherein the transmission (4) is supported with respect to the bogie (1) via the torque support (5) and has an emergency catch device (6) with a receiving region (6a) that is able to be caught on a support structure (1a) of the bogie (1), **characterized in that** a sensor system (8) for monitoring failure of the torque support (5) is arranged in the receiving region (6a) of the emergency catch device (6) and/or in the region of the support structure (1a).

2. Arrangement according to Claim 1, **characterized in that** an open gap (7) is left between the receiving region (6a) of the emergency catch device (6) and the support structure (1a) on the bogie (1), which gap, in the event of failure of the torque support (5), is bridged by way of a contact between the emergency catch device (6) and the support structure (1a).

3. Arrangement according to Claim 1 or 2, **characterized in that** the receiving region (6a) of the emergency catch device (6) has an approximately U-shaped cutout, and the support structure (1a) has an approximately rectangular cross section which is adapted to the U-shaped cutout.

4. Arrangement according to Claim 1, 2 or 3, **characterized in that** the torque support (5) is articulated on the transmission (4) adjacent to the receiving region (6a) of the emergency catch device (6).

5. Arrangement according to Claim 2, or according to either of Claims 3 and 4 where dependent on Claim 2, **characterized in that** the sensor system comprises at least one sensor (8) which is arranged in the region of the gap (7) and/or in the receiving region (6a) of the emergency catch device (6).

6. Arrangement according to Claim 5, **characterized in that** the at least one sensor is designed as a strain gauge (8).

7. Arrangement according to Claim 5, **characterized in that** the sensor (8) is designed as an electrical on/off contact and is arranged in the gap (7) or at the receiving region (6a) of the emergency catch device (6).

8. Arrangement according to Claim 5, **characterized in that** the sensor (8) is designed as a device for measuring a through current between the emergency catch device (6) and the support structure (1a).

## Revendications

1. Ensemble pour le soutien d'une transmission (4) sur le bogie (1) d'un véhicule ferroviaire, l'ensemble comprenant la transmission (4), le bogie (1) et un support de couple (5), et la transmission (4) étant soutenue par le biais du support de couple (5) par rapport au bogie (1) et présentant un dispositif de retenue d'urgence (6) comportant une région de réception (6a), lequel dispositif de retenue d'urgence peut être retenu sur une structure de support (1a) du bogie (1), **caractérisé en ce qu'**un système de capteurs (8) servant à la surveillance d'une défaillance du support de couple (5) est disposé dans la région de réception (6a) du dispositif de retenue d'urgence (6) et/ou dans la région de la structure de support (1a).

2. Ensemble selon la revendication 1, **caractérisé en ce qu'**un interstice ouvert (7) demeure entre la région de réception (6a) du dispositif de retenue d'urgence (6) et la structure de support (1a) sur le bogie (1), lequel interstice, en cas de défaillance du support de couple (5), est comblé par un contact entre le dispositif de retenue d'urgence (6) et la structure de support (1a).

3. Ensemble selon la revendication 1 ou 2, **caractérisé en ce que** la région de réception (6a) du dispositif de retenue d'urgence (6) présente un évidement réalisé sensiblement en forme de U et la structure de support (1a) présente une section transversale approximativement rectangulaire, adaptée à l'évidement en forme de U.

4. Ensemble selon la revendication 1, 2 ou 3, **caractérisé en ce que** le support de couple (5) est articulé sur la transmission (4) de manière adjacente à la région de réception (6a) du dispositif de retenue d'urgence (6).

5. Ensemble selon la revendication 2, ou selon l'une des revendications 3 et 4, lorsqu'elles dépendent de la revendication 2, **caractérisé en ce que** le système de capteurs présente au moins un capteur (8), lequel est disposé dans la région de l'interstice (7) et/ou dans la région de réception (6a) du dispositif de retenue d'urgence (6).

6. Ensemble selon la revendication 5, **caractérisé en ce que** l'au moins un capteur est réalisé sous forme de jauge extensométrique (8).

7. Ensemble selon la revendication 5, **caractérisé en ce que** le capteur (8) est réalisé sous forme de contact électrique marche/arrêt et est disposé dans l'interstice (7) ou au niveau de la région de réception (6a) du dispositif de retenue d'urgence (6).

8. Ensemble selon la revendication 5, **caractérisé en ce que** le capteur (8) est réalisé sous forme de dispositif servant à la mesure d'un courant de passage entre le dispositif de retenue d'urgence (6) et la structure de support (1a).
